# EUROPEAN PATENT APPLICATION

(11) **EP 4 779 863 A1**
(43) Date of publication of application: **22.07.2026**
(21) Application number: 25152725.5
(22) Date of filing: 20.01.2025
(51) Int. Cl.: H02S 10/40, F24S 25/00, H02S 30/20

(54) **FRAME UNIT FOR SIMPLIFIED FOLDING AND UNFOLDING OF PHOTOVOLTAIC MODULES AND METHOD FOR FOLDING AND UNFOLDING IT**

(71) Applicant: UAB Gasvolta, 56201 Martiniskiu k., Kaisiadoriu r. (LT)
(72) Inventor: Lapinskas, Donatas, 56201 Martiniskiu k 18, Kaisiadoriu raj. (LT)
(74) Representative: Metida

(57) **Abstract**

Frame unit for simplified folding and unfolding of photovoltaic modules and method for folding and unfolding It. The invention relates to a frame unit for simplified folding and unfolding of photovoltaic modules, comprising: a main frame (2); an unfolding frame (12) pivotably connected to the main frame via hinge construction (8") to enable upward pivoting; a set of four photovoltaic modules, where: the first three modules are fixed on the unfolding frame (12); wherein the hinge construction (8) is between second and third modules and fourth module is pivotably connected to the third via hinge constructions (8') with an angle stopper (11)to limit movement at an angle α.

The guiding wheels (7) attached to the free end of the fourth module, configured to move along the rails (10) for smooth motion and proper alignment. A handles (9, 9') of the unfolding frame (12), facilitating manual lifting, handling, and fixation.

## Description

### FIELD OF THE INVENTION

The invention relates to the field of renewable energy systems, specifically to mobile photovoltaic systems designed for temporary or mobile applications. More particularly, the present invention relates to an easy folding and unfolding system designed to enhance the portability and usability of photovoltaic modules. It is particularly suited for integration with ISO-type containers.

### BACKGROUND

In the field of mobile power generation, especially for ISO containers, several challenges and problems persist, particularly when addressing temporary or mobile applications. Traditional power solutions, such as internal combustion engine-based generators, have long been used to supply electricity to mobile containers. However, generators present several significant issues: they are costly to operate, noisy, polluting, and require constant fuel supply, making them unsustainable in the long term. Additionally, temporary grid connections are often used, but they require complex and expensive installation processes, including permits and safety measures, which can be impractical for short term or remote applications.

Another challenge in this sector is the lack of flexibility and mobility in existing power solutions. Many power systems are stationary and do not integrate well with the mobile nature of ISO containers, which are frequently relocated or used in temporary setups. Moreover, existing renewable power solutions are often not tailored for integration with ISO containers, leading to challenges in portability, ease of installation, and protection during transport.

Mobile solar plants integrated with ISO containers have been explored as a potential solution to provide sustainable and decentralized power in various industries. Such systems aim to harness solar energy to generate electricity for containers used in temporary or mobile applications, such as construction sites, temporary accommodation, or emergency response areas. However, several key challenges have limited widespread adoption of mobile solar plants on ISO containers.

Existing solutions typically involve installing photovoltaic modules on the roof of the container, either permanently or as a detachable system. While this offers an eco-friendly alternative to diesel generators, these systems often face limitations in terms of mobility, ease of deployment, and protection during transport. Many current designs require specialized equipment for installation or have complex structural elements that make them difficult to handle by a small workforce.

Furthermore, many mobile solar solutions are not optimized for integration with ISO containers, leading to issues with durability, space efficiency, and flexibility in power generation. For instance, big and heavy photovoltaic modules are bulky or not designed to withstand the mechanical stresses encountered during transport, which can lead to damage or reduced lifespan. Additionally, existing solar systems for containers often lack flexibility in terms of power generation, storage, and ease of setup, which are critical for temporary or mobile applications where quick deployment and adaptability are essential.

Several known patent documents address mobile solar power systems for ISO containers, but each comes with limitations.

US8839574 (B1) patent document describes a pivoting solar panel device with a base frame and support frames. While it offers a pivoting mechanism for solar panel adjustment, it does not provide a compact, easy-to-transport solution and may require additional equipment for installation.

GB2463098 (A) patent document discusses the use of photovoltaic panels on the roof of ISO containers with a frame for mounting and electrical storage. It introduces the idea of integrating hydrogen electrolysis but lacks flexibility in deployment and ease of use in mobile applications, and the system is less suited for transport protection.

JP2012001152 (A) patent document focuses on a solar power generation panel with corner fittings for easy container mounting. While it offers flexibility, it doesn't address the challenges of protecting the panels during transport or provide an efficient mechanism for unfolding and adjusting the panels.

S4421943 (A) patent document describes a solar panel system with a retractable frame for storage, but it doesn't highlight the integration of solar energy with ISO container systems in a modular and easy-to-use way, limiting its practical applications in mobile scenarios.

CN210518197 (U) patent document describes a tension-type installation frame for solar panels. However, it doesn't address the mobility or ease of installation for containers, nor does it ensure protection during transport.

Each of these patents provides certain features but fails to combine all the necessary elements for a highly portable, efficient, and easily deployable mobile solar power solution suited for ISO containers. While some innovations have attempted to address these issues by providing modular or foldable photovoltaic modules, these solutions still face challenges related to ease of use, protection during transport, and efficient energy storage.

These issues underscore the need for a new, innovative approach to mobile power generation that is sustainable, easy to deploy, and integrates seamlessly with ISO container systems. The present invention aims to overcome these challenges by providing a folding and unfolding frame unit designed to enhance the portability and usability of photovoltaic modules. Photovoltaic-based power supply system that is specifically designed for easy installation, operation, and transportation tailored for ISO containers.

### SUMMARY OF THE DISCLOSURE

The invention concerns a frame unit for simplified folding and unfolding of photovoltaic modules (modules) and a mobile photovoltaic system enabling efficient solar energy collection, compact storage, and user-friendly deployment.

The frame unit for simplified folding and unfolding of photovoltaic modules, comprising a main frame and an unfolding frame configured to fold via hinge constructions and pivotably connected to the main frame through a hinge construction, enabling the unfolding frame to pivot upward relative to the main frame. The frame unit includes a set of four photovoltaic modules fastened to the unfolding frame, wherein the first three modules in a row are fixed to the unfolding frame, and the fourth module is pivotably connected to the third module through hinge constructions equipped with an angle stopper configured to limit movement at an angle α, where the angle range is from 45° to 80°, with an optimal angle of approximately 60°. Also, a hinge construction is positioned between the second and third photovoltaic modules. In the folded position, the two bottom photovoltaic modules face upward, with the two top modules facing downward on top of them, while in the unfolded position, all four modules face upward. Guiding wheels are attached to the free end of the fourth photovoltaic module and configured to move along rails positioned on both sides of the unfolding frame, adjacent to the bottom photovoltaic module, ensuring smooth motion and alignment. Also, the unfolding frame, continuing in a foldable manner, minimizing effort during deployment, and a handle to facilitate manual lifting, handling, and securing of the top photovoltaic modules during the unfolding, folding, and fixation processes.

The photovoltaic system is configured for installation on an ISO container and comprises the main frame designed for mounting on the container, along with the frame unit described above. Additionally, the mobile photovoltaic system may comprise a base integrated into the main frame, suitable for housing inverters configured to supply plug-and-play electric power to electricity-demanding equipment and/or battery storage. This configuration allows for easy replacement, maintenance, or upgrading of energy management components, making it suitable for mobile and/or off-grid applications.

Additionally, the frame unit may comprise a lifting mechanism integrated into the photovoltaic device main frame to assist in adjusting the deployment angles of the photovoltaic modules. This mechanism allows manual or automatic operation, optimizing the modules angles for maximum solar energy collection.

The invented frame unit optionally includes protection during transport, with the bottom and top photovoltaic modules shielded from external impacts. When folded, the entire photovoltaic module set, and the unfolding frame fits securely within the photovoltaic device main frame. The invention also encompasses a method for deploying the photovoltaic modules, involving lifting the handle to pivot the unfolding frame upward, guiding the modules along rails, sequentially unfolding the modules via hinged constructions, flipping the fourth module to face upward, and adjusting the deployment angles using the lifting mechanism.

This portable and durable photovoltaic system is ideal for temporary and mobile applications, particularly when mounted on ISO containers, delivering efficient and flexible energy solutions.

### BRIEF DESCRIPTION OF THE DRAWINGS

Fig. 1 - illustrates the mobile photovoltaic system mounted on an ISO container, with an additional container serving as a flat surface, a support for the extended solar power plant module in a setup position.
Fig. 2 - illustrates the mobile photovoltaic system in its preparation stage.
Fig. 3 - illustrates the mobile photovoltaic system in its preparation stage.

1 - ISO type container; 2 - main frame; 3 - photovoltaic modules set; 3' - two bottom photovoltaic modules; 3" - third photovoltaic module; 3'" - forth top photovoltaic module; 4 - photovoltaic modules set; 4' -two bottom photovoltaic modules; 4" - third photovoltaic module; 4'" - forth top photovoltaic module; 5 - photovoltaic modules set; 5' - bottom photovoltaic modules; 5" - third photovoltaic module; 5'" - forth top photovoltaic module; 6 - photovoltaic modules lifting mechanism; 7 - guiding wheel; 8, 8', 8" - hinged constructions; 8'" - hinged point; 9, 9' - lifting handle; 10 - rails; 11 - angle stop; 12 - unfolding frame.

### DETAILED DESCRIPTION OF THE INVENTION

For a clearer explanation of the essence and characteristics of the invention, a detailed description of a frame unit (an unfolding construction) for photovoltaic modules which can be adaptable to use in a mobile photovoltaic system specifically for ISO containers, and the associated methods are provided as examples. It should be noted that while numerous specific details are included to ensure a comprehensive and complete description of the invention embodiments, these examples are not intended to limit the scope of the invention. A person skilled in the art will recognize that the invention can be implemented without adhering strictly to these specific instructions.

This invention is applicable for use on flat surfaces or other structures able to hold it.

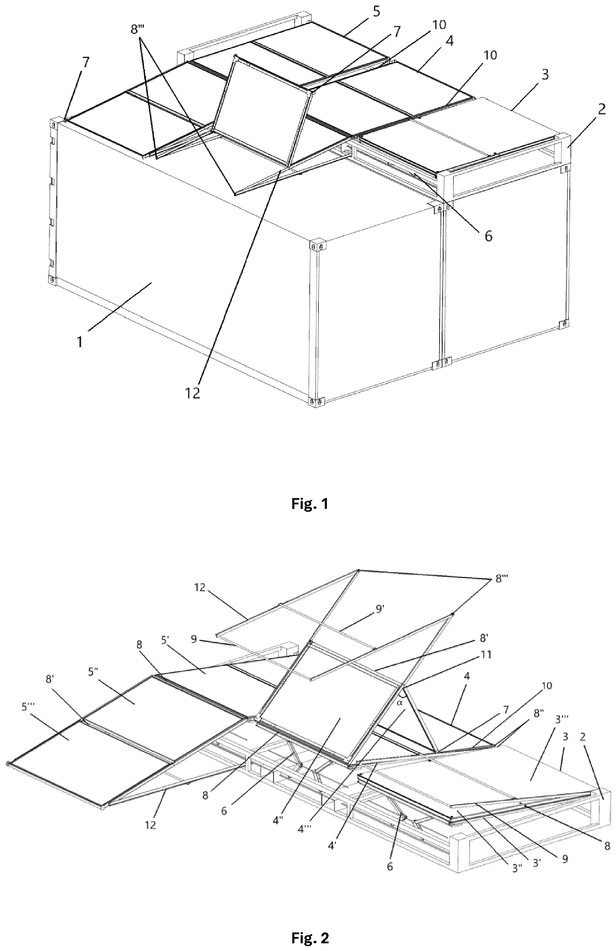

This example of photovoltaic system is configured for secure mounting on the top of an ISO container (1) (Fig. 1).

The frame unit comprises an unfolding frame (12) featuring two parallel segments joined and extending in foldable manner by hinged constructions (8), (8') and hinged point (8‴), and is pivotably fixed by a hinged construction (8") to a main frame (2) (photovoltaic system frame). This pivotal connection enables the unfolding frame (12) to rotate upward relative to the photovoltaic system frame (2) to adjust the photovoltaic system to the optimal position for solar power collection. The frame (2) is made of a strong and stable material, preferably stainless steel or another durable and equivalent alternative material. The main frame (2) is designed to conform to the top shape of the ISO container's (1) and can be securely attached to it. Also, the main frame (2) has reinforcements at the corners and, if necessary, in the middle to support the weight of at least three unfolding frames (12) each equipped with sets of photovoltaic modules (3), (4), (5) (Fig. 1, 2, 3).

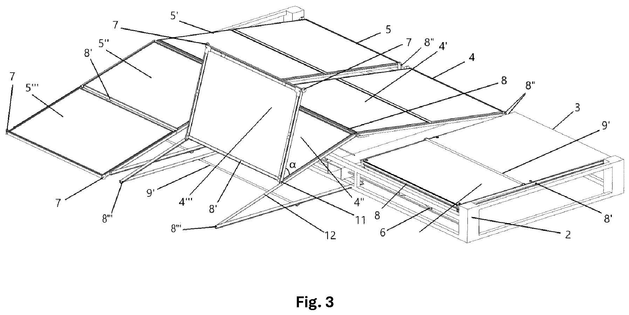

The photovoltaic modules sets (3) (4) and (5) (Fig. 1, 2, 3) each comprise four photovoltaic modules in a row mounted on the unfolding frames (12). The photovoltaic modules set (3) is (shown in Fig. 1 and 3) in folded transportation or storage position; photovoltaic modules set (4) (Fig. 2) is in raised unfolding (folding) position and photovoltaic module set (5) is (Fig. 1, 2 and 4) is in unfolded working position. In the folded position, the two bottom photovoltaic modules (3'), (4'), (5') face upward, and the two top photovoltaic modules third photovoltaic modules (3"), (4"), (5") and fourth photovoltaic modules (3‴), (4‴), (5‴) face downward, creating a compact and protected configuration suitable for transport or storage.

Describing and explaining the invention the photovoltaic modules set (4) will be described in detail. While the photovoltaic modules set (3) and (5) are analogue to photovoltaic module set (4).

First three photovoltaic modules (4') and (4") were tightly fixed on the unfolding frame (12). The unfolding frame (12) comprises a hinge construction (8) located between the second photovoltaic module (4') and third (4"). And the third photovoltaic module (4") and fourth photovoltaic module (4‴) are connected by hinged construction (8') with an angle stopper (11) at an angle α, positioned, with an angle being approximately 60°, for facilitating controlled deployment and reducing lifting effort. The hinges (8, 8') allow the photovoltaic modules to pivot and unfold sequentially, with a limiting angle α to ensure smooth deployment and reduce lifting effort.

In the unfolding frame (12) on both sides of the photovoltaic module (4') there are integrated rails (10) and on the free end corners of the fourth photovoltaic module (4‴) are attached the guiding wheels (7) which and are configured to move along the rails (10) at the begging of unfolding frame (12) unfolding and at the end of unfolding frame (12) folding. These guiding wheels (7) and the rails (10) ensure smooth, precise, and aligned movement during the unfolding/folding process, contributing to the ease of deployment.

The frame (12) foldable structure continuing via hinged point (8‴) includes a handle (9, 9') integrated into its foldable structure, enabling ergonomic operation and reducing the effort required for lifting, unfolding, and folding the photovoltaic modules.

The fourth photovoltaic module (4‴) would rest on the frame (12) in unfolded position as can be seen in Fig. 1, 2 and 3 the fourth photovoltaic module (5‴) in photovoltaic module set (5). The photovoltaic system frame (2) may also include a scissor like lifting mechanism (6) connected to the unfolding frame (12) at hinged construction (8). This mechanism assists in raising and positioning the photovoltaic modules during deployment. Operable either manually or automatically, it allows for precise adjustment of the module angles, optimizing solar energy collection under varying environmental conditions.

Additionally, for energy management, the photovoltaic system frame (2) optionally includes an integrated base suitable for housing inverters or battery storage. These inverters provide plug-and-play electric power to connected equipment, while the battery storage ensures continuous power availability. The base is designed for easy replacement, maintenance, and upgrading of these components, ensuring long-term adaptability and efficiency.

Furthermore, the photovoltaic system frame (2) features cavities on its sides to facilitate its lifting with standard lift trucks or other lifting equipment.

Additionally, in the folded position, the system ensures protection of the photovoltaic modules. The bottom photovoltaic modules are covered on their undersides, and the top photovoltaic modules are shielded from above, protecting the entire set during transport or storage.

These optional configurations and features enhance the versatility and durability of the photovoltaic system, making it particularly effective for deployment on ISO containers and other flat surfaces in diverse operational settings.

The invention includes a method for unfolding photovoltaic modules using above-described invention enabling smooth and efficient deployment from folded configuration photovoltaic modules set (3) to an operational state photovoltaic modules set (5) (shown in Fig. 1, 2, 3). This method ensures proper alignment and positioning of the photovoltaic modules for optimal solar energy collection.

Fixing the frame (2) to the roof of the ISO container (1) is the first step.

At the beginning of the unfolding the photovoltaic modules, lifting the unfolding frame (12) with the handle (9) by either human or automatic force. As the handle (9) is lifted, which reduces the lifting effort required for deployment (Fig. 2). Further pulling, towards the unfolding, the handle (9') of the unfolding frame (12) with top photovoltaic modules (4") and (4‴) pivots sequentially on the hinge constructions (8') and (8) during the unfolding process upward relative to the photovoltaic system frame (2). During this process, the guiding wheels (7) move along the rails (10). This configuration ensures smooth, precise, and aligned movement during unfolding, contributing to ease of deployment. Additionally, the angle stopper (11) on the hinged construction (8') limits the unfolding angle (α) of the fourth photovoltaic module (4‴) to ensure easer lifting and flipping of the unfolding frame (12) with the top photovoltaic modules (4", 4‴).

Once the fourth photovoltaic module (4‴) has reached its restricted position at an angle α, flipping the unfolding frame (12) by the handle (9) via the hinge construction (8) and putting downward to rest on the flat surface or photovoltaic system frame (2) (Fig. 3). The third photovoltaic module (4") then is in its faces upward, completing its transition into the operational state. Then via the hinged construction (8') flipping the fourth photovoltaic module (4‴), like the fourth photovoltaic module (5‴) (shown in Fig. 1, 2 and 3) and it rest on the frame (12) with top side faces upward, completing its transition into the operational state.

Then adjusting photovoltaic modules via hinge constructions (8, 8") to achieve the desired deployment angles, maximizing solar energy collection based on environmental conditions.

This method further includes an adjusting photovoltaic module using a photovoltaic module lifting mechanism (6) to achieve the desired deployment angles, maximizing solar energy collection based on environmental conditions, and fixing the lifting mechanism (6) in adjusted position. Lifting mechanism (6) for lifting and adjusting the photovoltaic modules to the desired deployment angles. By enabling precise positioning, the lifting mechanism (6) ensures maximum solar energy collection based on the environmental conditions, and fixing the lifting mechanism (6) in adjusted position (Fig. 2).

This unfolding method provides an efficient process for transitioning the photovoltaic modules from a compact storage position to an optimized energy-collecting state, making it suitable for mobile and temporary solar energy applications.

A method for folding photovoltaic modules using unfolded described frame unit involves the following steps:
First, flipping upward the fourth photovoltaic module (4‴) by the hinge construction (8') until it reaches the angle (α) limited by the angle stopper (11) on the hinge construction (8'). This ensures controlled motion and prevents overextension.

Next, lifting the frame (12) by the handle (9') and later (9) via the hinge construction (8) until the unfolding frame (12) with handle (9 and 9') and unfolding frame (12) with the top photovoltaic modules (4") and (4‴) flips.

Finally, lowering the unfolding frame (12) part with the top photovoltaic modules (4") and (4‴) relative to the main frame (2) by the handles (9 and 9') until the guiding wheels (7) reaches respective rails (10) and moves along it to provide smooth motion and maintain proper alignment as the fourth photovoltaic module (4‴) is lowered into the flat folded position.

The method ensures smooth folding operation, proper alignment, and secure storage of the photovoltaic modules.

The invention described provides an innovative and efficient frame unit for the simplified folding and unfolding of photovoltaic modules. The system comprises a main frame (2) serving as a stable foundation and an unfolding frame (12) pivotably connected to the main frame via hinge constructions (8, 8', 8"), enabling controlled upward pivoting. A set of four photovoltaic modules is integrated, with the first three fixed on the unfolding frame (12) and the fourth pivotably connected via hinge constructions (8') featuring the angle stoppers (11) to limit movement at an angle α. Guiding wheels (7) attached to the fourth module facilitate smooth motion along the rails (10), while a handle (9), enabling easy manual lifting and secure fixation. The method of operation ensures precise deployment and adjustment of the photovoltaic modules to achieve optimal angles for energy collection. This compact, portable, and user-friendly system is particularly suitable for mobile and off-grid solar applications, significantly enhancing the adaptability, functionality, and efficiency of renewable energy solutions.

## Claims

1. Frame unit for simplified folding and unfolding of photovoltaic modules comprises:
a main frame (2);
an unfolding frame (12) configured to fold via hinge constructions and pivotably connected to the main frame (2) through a hinge construction (8"), enabling the unfolding frame (12) to pivot upward relative to the main frame (2);
the unfolding frame (12) is designed to accommodate a set of photovoltaic modules, which can be securely fastened to it;
**characterised in that**
the set of photovoltaic modules comprising four photovoltaic modules in a row, wherein the first three photovoltaic modules are fixed on the unfolding frame (12); and
the hinge construction (8) is located between the second and third photovoltaic modules;
the fourth photovoltaic module in a row is pivotably connected to the third photovoltaic module via the hinge construction (8') controlled by an angle stopper (11) that limits movement to an angle α;
in a folded position of the unfolding frame (12) the two bottom photovoltaic modules face upward, and on top of it two top photovoltaic modules face downward; and
in an unfolded position, the two top photovoltaic modules also face upward;
the guiding wheels (7) attached to the free end of the fourth photovoltaic module, configured to move along rails (10) on both sides of the frame (12), positioned on the sides of the bottom photovoltaic module; and
the unfolding frame (12) continuing in foldable manner via hinged point (8‴) and is equipped with a handle (9, 9') to facilitating manual lifting and handling during the unfolding, folding, and fixation processes of the top photovoltaic modules.

2. Frame unit for simplified folding and unfolding of photovoltaic modules, according to claim 1, **characterised in that**, the angle stopper (11) is configured to limit the angle α of the photovoltaic modules during unfolding, wherein the angle α is adjustable within a range from 45 to 80 degrees, with the optimal angle α being approximately 60 degrees, facilitating efficient lifting with reduced force.

3. Frame unit for simplified folding and unfolding of photovoltaic modules, according to any of the preceding claims, **characterised in that** further comprising a lifting mechanism (6) integrated into the frame (2) and connected to frame construction (12), between the second and third photovoltaic modules wherein the lifting mechanism (6) is configured to assist in raising, positioning and fixing the photovoltaic modules during deployment, and is operable manually or automatically to enable variable angle adjustment for optimal solar energy collection.

4. A photovoltaic system for mounting on an ISO container (1), **characterised in that** it comprises:
a frame (2) configured for installation on the container (1);
at least one frame unit according to any of claims 1-3.

5. The mobile photovoltaic system, according to claim 4, **characterised in that** it further comprises base integrated into the frame (2), suitable for housing inverters configured to supply plug-and-play electric power to electricity-demanding equipment or battery storage, allowing for easy replacement, maintenance, or upgrading of energy management components.

6. The mobile photovoltaic system, according to any of claims 4, 5, **characterised in that** in the folded position, two bottom photovoltaic modules from the bottom are covered with protection and two top photovoltaic modules from the top are covered with protection from outer impact and are prepared for transportation position all photovoltaic modules set with frame (12) fits in frame (2).

7. A method for unfolding photovoltaic modules using a frame unit designed for simplified folding and unfolding of photovoltaic modules, wherein the method steps comprise:
tightly fixing the frame (2) to a flat surface;
lifting the handle (9) of the unfolding frame (12) upward via the hinged point (8‴) and subsequently pulling the handle (9') toward the unfolding side, either manually or using automatic force; then
the unfolding frame (12) pivots upward relative to the frame (2) via the hinged construction (8), with top photovoltaic modules when the fourth photovoltaic module via the hinge construction (8') is lifted and its free end via guiding wheels (7) moving along the rails (10) on both sides of the frame (12), ensuring smooth motion and proper alignment,
the angle stopper (11) on the hinge construction (8') limiting the unfolding angle (α) of the fourth photovoltaic module; then
flipping the frame (12) part with the handles (9 and 9') via the hinge construction (8);
flipping the fourth photovoltaic module via the hinge construction (8') so that its top side faces upward;
adjusting photovoltaic modules via hinge constructions (8, 8") to achieve the desired deployment angles, maximizing solar energy collection based on environmental conditions.

8. A method for folding photovoltaic modules using a frame unit designed for simplified folding and unfolding of photovoltaic modules, wherein the method steps comprise:
flipping the fourth photovoltaic module upward via the hinge construction (8') until the angle stopper (11) limits the unfolding angle (α) of the fourth photovoltaic module;
lifting the frame (12) with the handle (9') via the hinge construction (8);
flipping the unfolding frame (12) with the handles (9' and 9) via the hinge construction (8);
using the guiding wheels (7) along the rails (10) on both sides of the frame (12) to ensure smooth motion and proper alignment of the fourth photovoltaic module as it is lowered;
lowering the unfolding frame (12) relative to the frame (2) via the hinge construction (8),
ensuring the top photovoltaic modules lie neatly and securely;
lowering the unfolding frame (12) with the handles (9 and 9') via hinged point (8‴) into the compact and folded position.

9. A method for unfolding a photovoltaic device according to claim 8, **characterised in that** the method also comprises a step of lifting the photovoltaic modules using a photovoltaic module lifting mechanism (6);
adjusting photovoltaic modules using a photovoltaic module lifting mechanism (6) to achieve the desired deployment angles, maximizing solar energy collection based on environmental conditions
fixing the lifting mechanism (6) in adjusted position.
